# EUROPÄISCHE PATENTSCHRIFT

(11) **EP 2 104 832 B1**
(45) Veröffentlichungstag und Bekanntmachung des Hinweises auf die Patenterteilung: **05.05.2010**
(21) Anmeldenummer: 07856093.5
(22) Anmeldetag: 12.12.2007
(51) Int. Cl.: G01B 5/26, F01D 21/00

(54) **VERFAHREN UND VORRICHTUNG ZUR ERMITTLUNG DES AUSTRITTSQUERSCHNITTS EINES BAUTEILS EINER GASTURBINE**
METHOD AND DEVICE FOR DETERMINING THE OUTLET CROSS SECTION OF A COMPONENT OF A GAS TURBINE
PROCÉDÉ ET DISPOSITIF DE DÉTERMINATION DE LA SECTION DE SORTIE D'UN COMPOSANT D'UNE TURBINE À GAZ

(30) Priorität: 23.12.2006 DE 102006061446
(43) Veröffentlichungstag der Anmeldung: 30.09.2009
(73) Patentinhaber: MTU Aero Engines GmbH, 80995 München (DE)
(72) Erfinder: LANGE, Anja, 30855 Langenhagen (DE); PERLEBERG, Jens-Heiko, 30161 Hannover (DE)
(86) Internationale Anmeldenummer: PCT/DE2007/002243
(87) Internationale Veröffentlichungsnummer: WO 2008/077373

(56) Entgegenhaltungen:
- GB-A- 2 058 373
- US-A- 4 896 430
- US-A1- 2002 193 897

## Beschreibung

Die Erfindung betrifft ein Verfahren sowie eine Vorrichtung zur Ermittlung des Austrittsquerschnitts eines, eine oder mehrere Turbinenschaufeln umfassenden Bauteils, insbesondere eines Turbinenschaufel-Zwillings, einer Gasturbine der in den Oberbegriffen der Patentansprüche 1 bzw. 10 angegebenen Art.

Derartige Turbinenschaufel-Zwillinge, welche auch als Vane-Zwillinge bezeichnet werden, sind beispielsweise als im Wesentlichen kreisringsegmentförmige Bauteile ausgebildet, welche mit einer Mehrzahl von anderen Turbinenschaufel-Zwillingen einen Leitschaufelring beispielsweise im Hochdruckturbinenteil eines Strahltriebwerks bilden. Jeder der Turbinenschaufel-Zwillinge umfasst dabei vorzugsweise zwei Turbinenschaufeln, welche von einer radial inneren bzw. äußeren Plattform eingefasst sind. Die stationär innerhalb des Hochdruckturbinenteils angeordneten Turbinenschaufel-Zwillinge bzw. insbesondere die Turbinenschaufeln selbst unterliegen im Betrieb der Gasturbine einer hohen thermischen und mechanischen Belastung, die zu einem Verschleiß der Turbinenschaufeln insbesondere an deren jeweiliger hinterer Austrittskante führt.

Ein wesentlicher Faktor der Triebwerksleistung ist der Austrittsquerschnitt bzw. der engste Querschnitt der als Düsen wirkenden Turbinenschaufeln. Die Fläche dieses Austrittsquerschnitts wird durch den Verschleiß der Turbinenschaufeln beeinflusst und muss dementsprechend von Zeit zu Zeit - beispielsweise durch einen lokalen Materialauftrag an den Turbinenschaufeln - korrigiert werden. Der Austrittsquerschnitt bzw. der engste Querschnitt zwischen zwei Turbinenschaufeln wird von der Konkavseite der einen Turbinenschaufel zur Konvexseite der jeweils benachbarten Turbinenschaufel gemessen. Der Austrittsquerschnitt verläuft dabei in einer Ebene, welche senkrecht zur Abströmrichtung und auf Höhe der Austrittskante der jeweiligen Turbinenschaufel verläuft. Die Abströmrichtung bzw. der Austrittswinkel ergeben sich dabei als Tangente der Konkavseite der jeweiligen Turbinenschaufel an ihrer Hinterkante.

Bei der Ermittlung der Austrittsquerschnitte von Turbinenschaufel-Zwillingen ist insbesondere zwischen einem geschlossenen Austrittsquerschnitt zwischen den zwei benachbarten Turbinenschaufeln des Turbinenschaufel-Zwillings und offenen Austrittsquerschnitten zu unterscheiden, welche sich seitlich der zugeordneten Turbinenschaufel erstrecken. Diese offenen Austrittsquerschnitte bilden mit dem jeweils benachbarten offenen Austrittsquerschnitts des sich daran anschließenden Bauteils einen gesamten Austrittsquerschnitt, welcher der Fläche des geschlossenen Austrittsquerschnitts zwischen den beiden Turbinenschaufeln zumindest annähernd entspricht. Summiert man demzufolge die beiden offenen Austrittsquerschnitte jedes Bauteils auf, so entspricht deren Fläche ebenfalls etwa der Fläche des geschlossenen Austrittsquerschnitts zwischen den beiden Turbinenschaufeln.

Da jedes Bauteil separat für sich vermessen wird, hat es sich bislang als äußerst problematisch herausgestellt, die jeweiligen Austrittsquerschnitte jedes der Bauteile mit hoher Reproduzierbarkeit bzw. Wiederholgenauigkeit zu messen. Dies erfolgt momentan mittels einer mechanischen Messuhr, mit welcher punktuell Messwerte im Bereich des jeweiligen Austrittsquerschnitts aufgenommen werden. Dabei bleiben beispielsweise Radien des Austrittsquerschnitts unberücksichtigt. Ein weiteres Problem stellt bislang die Vermessung der offenen Austrittsquerschnitte dar, da diese zur jeweils zugehörigen Stirnseite des Bauteils hin keine entsprechende Begrenzungswand aufweisen.

US-A-4 896 430 beschreibt eine Vorrichtung zum Vermessen des Austrittsquerschnitts zwischen zwei Turbinenschaufeln. Die Vorrichtung weist einen linear verschiebbaren Messkopf mit zwei Sensoren auf, deren Bewegung zueinander senkrecht zur Verschiebungsrichtung gemessen wird. Zur Messung verschiebt die Messvorrichtung den Messkopf vom inneren zum äußeren Ende des Austrittsquerschnitts, wobei die Breite des Austrittsquerschnitts gemessen und in einer Rechnereinheit der Austrittsquerschnitt selbst berechnet wird.

In US-A-2002 193 897 wird der Austrittsquerschnitt zwischen zwei Turbinenschaufeln eines Bauteils durch Messung einzelner Punkte auf den Turbinenschaufeln und den Seitenwänden des Bauteils mittels einer Koordinatenmessmaschine bestimmt.

GB-A-2 058 373 beschreibt eine Vorrichtung zum Vermessen zweier offener Austrittsquerschnitte seitlich einer Turbinenschaufel in einem Bauteil. Dazu wird das Bauteil mittels einer Haltevorrichtung gehaltert, welche zwei Referenzoberflächen an den Sollpositionen der anschließenden Turbinenschaufeln aufweist. So kann der Austrittsquerschnitt beidseits der Turbinenschaufel gemessen werden.

Aufgabe der vorliegenden Erfindung ist es daher, ein Verfahren sowie eine Vorrichtung der eingangs genannten Art zu schaffen, mit welchen die jeweiligen Austrittsquerschnitte des Bauteils genauer und mit höherer Reproduzierbarkeit vermessen werden können.

Diese Aufgabe wird erfindungsgemäß durch ein Verfahren und eine Vorrichtung mit den Merkmalen der Patentansprüche 1 bzw. 10 gelöst. Vorteilhafte Ausgestaltungen mit zweckmäßigen und nicht-trivialen Weiterbildungen der Erfindung sind in den jeweils abhängigen Patentansprüchen angegeben.

Damit die jeweiligen Austrittsquerschnitte des Bauteils bedeutend genauer und reproduzierbarer vermessen werden können, ist es bei dem erfindungsgemäßen Verfahren vorgesehen, dass zum Ermitteln des entsprechenden Austrittsquerschnitts dessen jeweilige Begrenzungswände mittels der Messeinrichtung entlang einer Messlinie abgefahren bzw. abgetastet werden. Mit anderen Worten ist es bei dem erfindungsgemäßen Verfahren vorgesehen, dass mit der Messeinrichtung - beispielsweise mittels eines Tastkopfes - die jeweiligen Begrenzungswände des zugehörigen Austrittsquerschnitts entlang einer durchgängigen Messlinie abgefahren bzw. abgetastet werden. Durch eine derartige durchgehende Messlinie können somit bauteilbedingte Formänderungen der Begrenzungswände des jeweiligen Austrittsquerschnitts - beispielsweise im Bereich von Radien - deutlich genauer erfasst werden, so dass sich ein genauerer Wert realisieren lässt. Darüber hinaus kann eine derartige Messlinie deutlich reproduzierbarer abgefahren werden, als wenn beispielsweise lediglich eine Mehrzahl von Messpunkten aufgenommen werden.

Erfindungsgemäß wird das Bauteil vor dem Ermitteln der Messlinie mittels einer Halteeinrichtung fixiert, wobei die Ebene des jeweiligen Austrittsquerschnitts mittels eines zugeordneten Anschlags der Halteeinrichtung vorgegeben wird. Durch diese Fixierung mittels der Halteeinrichtung kann gewährleistet werden, dass eine reproduzierbare Messung - insbesondere beim Entlangführen der Messeinrichtung per Hand - erfolgt, weil das Abfahren oder Abtasten entlang einer offenen bzw. geschlossenen Messlinie hinreichend genau vorgenommen werden kann.

Als besonders vorteilhaft es sich in diesem Zusammenhang gezeigt, wenn mittels einer Rechnereinheit beim Abfahren bzw. beim Abtasten der Messlinie zugehörige Messwerte aufgenommen werden. Dabei kann auf einfache Weise ein Messintervall bestimmt weiden, in welchem beim Abfahren bzw. Abtasten der Messlinie zugehörige Messwerte mittels der Rechnereinheit aufgenommen werden. Demzufolge kann mittels der Rechnereinheit bestimmt werden, zu welchen Zeitpunkten bzw. an welchen Stellen der Messlinie ein Messwert aufgenommen werden soll, welcher zur Berechnung der Fläche des Austrittsquerschnitts dient. Durch die Vorgabe des Messintervalls lässt sich darüber hinaus die Genauigkeit bzw. die Reproduzierbarkeit des Messverfahrens regulieren.

Zur Messung des geschlossenen Austrittsquerschnitts zwischen den jeweiligen Turbinenschaufeln hat es sich als besonders einfach gezeigt, wenn die Messvorrichtung bzw. deren Tastkopf entlang der außenumfangseitigen Begrenzungswände in einer umlaufend geschlossenen Messlinie geführt wird. Eine solche Messlinie kann mittels des Tastkopfes der Messeinrichtung auf einfache Weise abgefahren werden und gewährleistet eine hohe Reproduzierbarkeit des Messvorgangs.

Soll hingegen einer der offenen Austrittsquerschnitte seitlich der jeweils zugehörigen Turbinenschaufel vermessen werden, so hat es sich als besonders probat gezeigt, die Messvorrichtung bzw. deren Tastkopf entlang der Begrenzungswände in einer offenen Messlinie zwischen voneinander entfernten Anfangs- und Endpunkten zu führen. Der Anfangs- und der Endpunkt der Messlinie werden dabei im Bereich der jeweiligen Stirnseite des Bauteils gewählt.

Um eine besonders genaue Berechnung des offenen Austrittsquerschnitts seitlich der jeweils zugehörigen Turbinenschaufel zu erreichen, hat es sich in weiterer Ausgestaltung der Erfindung als besonders vorteilhaft gezeigt, wenn an den Stirnseiten des Bauteils eine jeweilige Ebene mittels der Rechnereinheit bestimmt wird, wobei durch die Ebene eine jeweilige Begrenzungslinie des jeweils zugeordneten offenen Austrittsquerschnitts ermittelt wird. Die Ebene an der jeweiligen Stirnseite des Bauteils kann dabei auf einfache Weise dadurch bestimmt werden, dass eine Mehrzahl von jeweiligen Messpunkten im Bereich der Stirnseiten einer inneren und äußeren Plattform des Bauteils ermittelt werden, wobei durch die Messpunkte die entsprechende Ebene mittels der Recheneinheit bestimmt werden kann. Da einerseits eine jeweilige Ebene an der Stirnseite des Bauteils bestimmt wird und andererseits der zugehörige offene Austrittsquerschnitt mittels der offenen Messlinie abgefahren wird, kann somit durch die Rechnereinheit in äußerst genauer und reproduzierbarer Weise die Begrenzungslinie des offenen Austrittsquerschnitts zur offenen Seite des Bauteils hin ermittelt werden. Wie die äußerst genau ermittelbare Begrenzungslinie kann auch die Fläche des offenen Austrittsquerschnitts entsprechend genau bzw. reproduzierbar ermittelt werden.

In weiterer Ausgestaltung der Erfindung hat es sich in diesem Zusammenhang als vorteilhaft gezeigt, wenn die Messpunkte im Bereich der jeweiligen Stirnseite der inneren und äußeren Plattform des Bauteils ermittelt werden, bevor die jeweils zugehörige offene Messlinie des entsprechenden offenen Austrittsquerschnitts abgefahren bzw. abgetastet wird. Da somit bereits die Ebene an der Stirnseite des Bauteils feststeht, bevor die zugehörige offene Messlinie abgefahren wird, können deren Anfangs- und Endpunkt bzw. ein erster und ein letzter Messpunkt äußerst genau bestimmt werden.

In weiterer Ausgestaltung der Erfindung hat es sich als vorteilhaft gezeigt, wenn die Messvorrichtung zum Ermitteln der jeweiligen Messlinie und/oder zum Ermitteln der Mehrzahl von Messpunkten im Bereich der Stirnseite per Hand entlang des Bauteils bewegt wird. Hierdurch lässt sich ein hinreichend schnelles Messverfahren gewährleisten, wobei durch die entsprechenden Anschläge der Halteeinrichtung sichergestellt wird, dass die Bewegung der Messeinrichtung per Hand mit einer hinreichenden Genauigkeit erfolgt.

Schließlich hat es sich bei dem erfindungsgemäßen Verfahren als vorteilhaft gezeigt, wenn die beiden offenen Austrittsquerschnitte zu einem gesamten Austrittsquerschnitt summiert werden, welcher in seiner Größe zumindest annähernd demjenigen des geschlossenen Austrittsquerschnitts entspricht. Bei einem als Turbinenschaufel-Zwilling ausgebildeten Bauteil bedeutet dies, dass somit zwei gesamte Austrittsquerschnitte ermittelt werden. Der eine Wert ergibt sich dabei aus demjenigen des geschlossenen Austrittsquerschnitts zwischen den beiden Turbinenschaufeln, und der andere Wert ergibt sich aus der Summe der beiden offenen Austrittsquerschnitte seitlich der jeweiligen Turbinenschaufel. Insgesamt kann somit der gesamte Austrittsquerschnitt eines Turbinenschaufel-Rings ermittelt werden, indem die jeweiligen Austrittsquerschnitte jedes einzelnen Turbinenschaufel-Zwillings aufsummiert werden.

Die vorstehend im Zusammenhang mit dem erfindungsgemäßen Verfahren beschriebenen Vorteile gelten auch für die erfindungsgemäße Vorrichtung. Diese zeichnet insbesondere dadurch aus, dass deren Messeinrichtung mit einer Rechnereinheit verbunden ist, über welche die durch Abfahren der Begrenzungswände entlang der Messlinie gewonnenen Messwerte auszuwerten sind.

Des Weiteren umfasst die erfindungsgemäße Vorrichtung eine Halteeinrichtung, innerhalb welcher das Bauteil zur reproduzierbaren Bestimmung der jeweiligen Austrittsquerschnitte fixiert werden kann. Die Haltevorrichtung umfasst dabei wenigstens einen Anschlag, welcher senkrecht zu einem zugeordneten Austrittswinkel verläuft und sich in der Ebene des jeweiligen Austrittsquerschnitts erstreckt. Durch einen derartigen Anschlag ist es möglich, die Messvorrichtung bzw. deren Tastkopf äußerst genau und reproduzierbar per Hand entlang der Begrenzungswände des jeweiligen Austrittsquerschnitts zu fuhren. In diesem Zusammenhang hat es sich als besonders vorteilhaft gezeigt, wenn die Halteeinrichtung für jeden der Austrittsquerschnitte des Bauteils einen Anschlag aufweist, so dass in einer Abfolge sämtliche Austrittsquerschnitte - beispielsweise per Hand - äußerst genau und reproduzierbar entlang der jeweils zugehörigen offenen bzw. geschlossenen Messlinie vermessen werden können.

Schließlich hat es sich als vorteilhaft gezeigt, wenn die Messvorrichtung mittels eines Kalibrierungsbauteils und/oder eines Kalibrierkegels zu kalibrieren ist. Hierdurch wird auf einfache Weise sichergestellt, dass die Vermessung der jeweiligen Bauteile bzw. von deren jeweiligen Austrittsquerschnitten ohne wesentlichen Messfehler erfolgen kann.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:

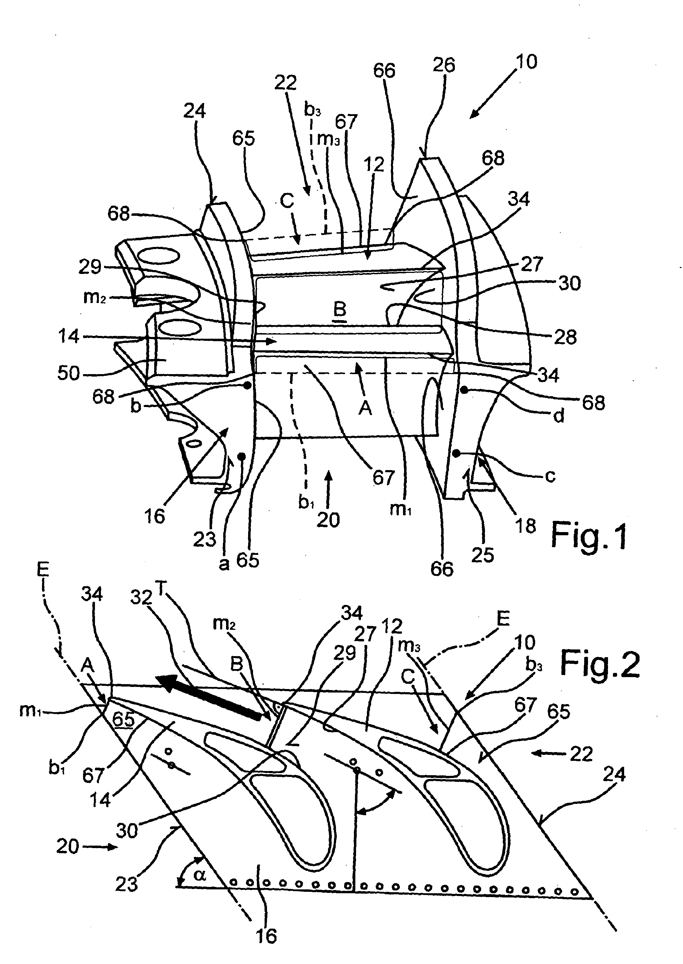

- Fig. 1: eine schematische Perspektivansicht auf ein Bauteil einer Gasturbine in Form eines Turbinenschaufel-Zwillings, welcher zwei sich zwischen einer inneren und äußeren Plattform erstreckende Turbinenschaufeln umfasst, wobei zwischen den beiden Turbinenschaufeln ein geschlossener Austrittsquerschnitt und seitlich der jeweiligen Turbinenschaufeln zur Stirnseite des Bauteils hin offene Austrittsquerschnitte erkennbar sind, welche entlang einer geschlossenen bzw. offenen Messlinie vermessen werden;
- Fig. 2: eine schematische Schnittansicht durch den Turbinenschaufel-Zwilling gemäß Fig. 1, wobei die Lage des offenen bzw. der beiden geschlossenen Austrittsquerschnitte erkennbar wird;

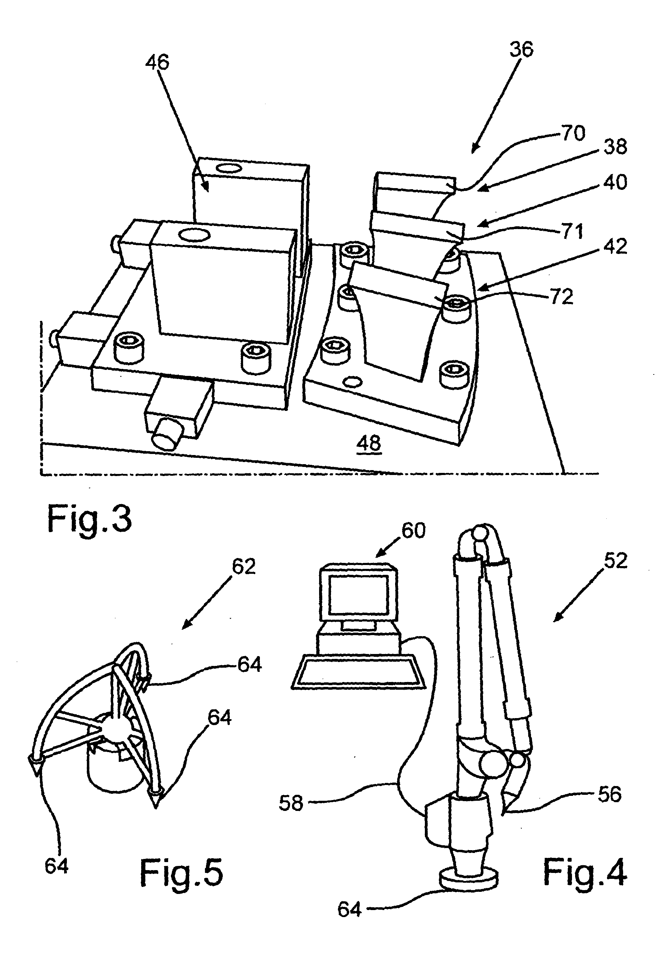

- Fig. 3: eine schematische Perspektivansicht auf einen Teil einer Halteeinrichtung zur Fixierung des Turbinenschaufel-Zwillings gemäß den Fig. 1 und 2, wobei die Halteeinrichtung drei Anschläge umfasst, welche senkrecht zu einem jeweiligen Austrittswinkel verlaufen und sich in der Ebene des jeweiligen Austrittsquerschnitts erstrecken;
- Fig. 4: eine schematische Perspektivansicht auf eine Messeinrichtung, mittels welcher entlang der Begrenzungswände des jeweiligen Austrittsquerschnitts eine geschlossene bzw. offene Messlinie abfahrbar bzw. abtastbar ist und mittels welcher eine Mehrzahl von Messpunkten im Bereich der Stirnseiten der inneren und äußeren Plattform des Bauteils ermittelbar sind;
- Fig. 5: eine schematische Perspektivansicht auf einen Kalibrierkegel, mit welchem die Messeinrichtung gemäß Fig. 4 zu kalibrieren ist;

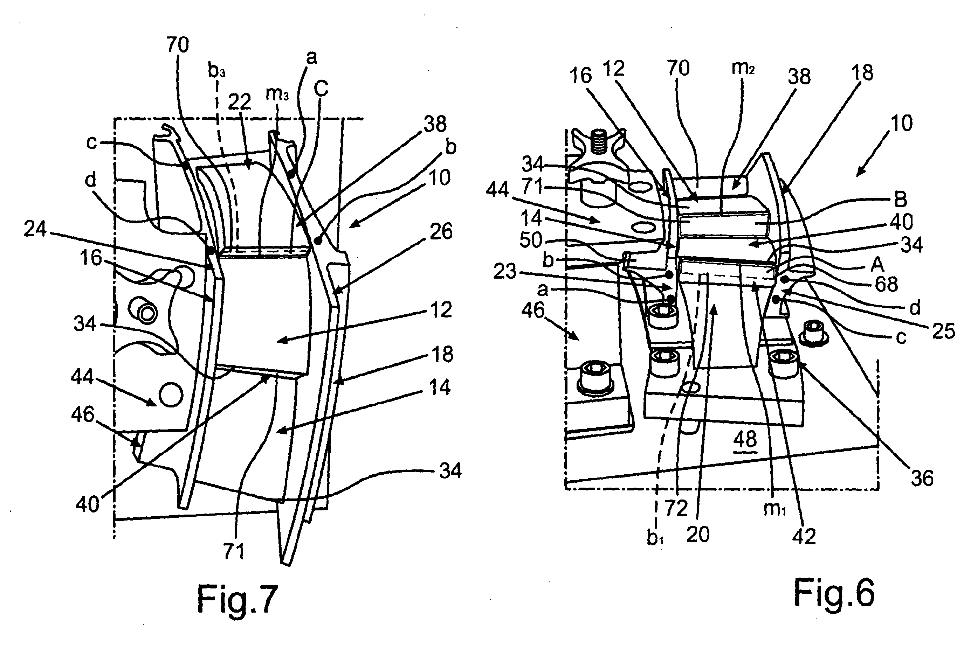

- Fig. 6: eine schematische und leicht perspektivische Vorderansicht auf die ausschnittsweise erkennbare Halteeinrichtung mit dem daran fixierten Turbinenschaufel-Zwilling, wobei die Ermittlung des geschlossenen Austrittsquerschnitts zwischen den beiden Turbinenschaufeln und die Ermittlung eines der beiden offenen Austrittsquerschnitte an der einen Stirnseite des Turbinenschaufel-Zwillings erläutert ist; und in
- Fig. 7: eine schematische und perspektivische Draufsicht auf die ausschnittsweise erkennbare Halteeinrichtung mit dem daran fixierten Turbinenschaufel-Zwilling gemäß Fig. 6, wobei die Ermittlung des zweiten offenen Austrittsquerschnitts an der anderen Stirnseite des Turbinenschaufel-Zwillings erläutert ist.

In den Fig. 1 und 2 ist in einer schematischen Perspektivansicht bzw. in einer schematischen Schnittansicht ein Bauteil einer Gasturbine in Form eines Turbinenschaufel-Zwillings 10 dargestellt, welcher in seiner Grundform etwa kreisringsegmentförmig ausgebildet ist. Vorliegend können drei und zwanzig derartige Turbinenschaufel-Zwillinge 10 zu einem Turbinenschaufel-Ring zusammengefasst werden, welcher im Hochdruckturbinenteil eines Strahltriebwerks angeordnet werden kann. Dieser Turbinenschaufel-Ring, welcher auch als Vane-Ring bezeichnet wird, ist fest innerhalb des Hochdruckturbinenteils angeordnet, wodurch dessen Turbinenschaufeln als Leitschaufeln fungieren.

Der vorliegende Turbinenschaufel-Zwilling 10 umfasst zwei Turbinenschaufeln 12, 14, welche in Fig. 2 im Schnitt erkennbar sind. Die beiden Turbinenschaufeln 12, 14 erstrecken sich dabei zwischen einer radial inneren Plattform 16 und einer radial äußeren Plattform 18. An den beiden Stirnseiten 20, 22 des Turbinenschaufel-Zwillings 10 endet die innere Plattform 16 an jeweiligen Stirnseiten 24, 25 und die äußere Plattform 18 endet an jeweiligen Stirnseiten 26, 27. In Zusammenschau mit Fig. 2 ist erkennbar, dass alle vier Stirnseiten 22, 24, 25, 26 in einem identischen Neigungswinkel a verlaufen. Die einander jeweils zugeordneten Stirnseiten 23 und 25 bzw. 24 und 26 sind dabei so angeordnet bzw. ausgerichtet, dass sich insgesamt die kreisringsegmentförmige Grundkontur des Turbinenschaufel-Zwillings 10 ergibt.

Ein Faktor, der die Triebwerksleistung und somit sowohl die Betriebssicherheit wie auch den spezifischen Treibstoffverbrauch beeinflusst, ist der Austrittsquerschnitt. Dieser wird auch als engster Querschnitt bzw. als "Throat Area" der als Düsen wirkenden Leitschaufeln 12, 14 bezeichnet. Dieser muss nach Reparatur- und Montagevorschriften des Triebwerksherstellers in bestimmten Grenzen liegen. Deshalb ist es erforderlich, dass dieser Austrittsquerschnitt möglichst genau gemessen werden kann.

Anhand von Fig. 2 wird nun zunächst ein geschlossener Austrittsquerschnitt B erläutert, welcher durch entsprechende Begrenzungswände 27, 28 auf der konkaven bzw. konvexen Seite der Turbinenschaufeln 12, 14 bzw. durch Begrenzungswände 29, 30 der inneren und der äußeren Plattform 16, 18 außenumfangseitig begrenzt ist. Dieser geschlossene Austrittsquerschnitt B erstreckt sich von der konkaven Seite der einen Turbinenschaufel 12 zur konvexen Seite der benachbarten Turbinenschaufel 14 in einer Ebene, welche senkrecht zur mit dem Pfeil 32 dargestellten Abströmrichtung bzw. dem entsprechenden Austrittswinkel in Höhe einer Austrittskante 34 der Turbinenschaufel 12 verläuft. Die mit dem Pfeil 32 dargestellte Abströmrichtung ergibt sich dabei als Tangente T der Konkavseite der Turbinenschaufel 12 an der Austrittskante 34.

Neben dem geschlossenen Austrittsquerschnitt B ergeben sich bei dem Turbinenschaufel-Zwilling 10 zwei offene Austrittsquerschnitte A, C, welche sich jeweils seitlich der zugeordneten Turbinenschaufel 12, 14 zur jeweiligen Stirnseite 20, 22 des Turbinenschaufel-zwillings 10 hin erstrecken. Diese jeweilig offenen Austrittsquerschnitte A, C werden jeweils dadurch zu einem gesamten bzw. geschlossenen Austrittsquerschnitt A, C vervollständigt, dass an den jeweiligen Turbinenschaufel-Zwilling 10 ein benachbarter Turbinenschaufel-Zwilling 10 angesetzt wird. Da jedoch alle Turbinenschaufel-Zwillinge 10 von identischer Form sind, macht man sich diesen Gedanken vorliegend dahingehend zunutze, dass die beiden offenen Austrittquerschnitte A, C sich zu einem gesamten Austrittsquerschnitt vervollständigen, welcher dann der Fläche des geschlossenen Austrittsquerschnitts B zumindest annähernd entspricht. Da jedoch jeder Turbinenschaufel-Zwilling 10 für sich genommen vermessen wird, muss nicht nur der geschlossene Austrittsquerschnitt B zwischen den beiden Turbinenschaufeln 12, 14 bestimmt werden, sondern auch die beiden offenen Austrittsquerschnitte A, C, welche sich dann insgesamt ebenfalls zu einem gesamten Austrittsquerschnitt vervollständigen.

In Fig. 3 ist in einer schematischen Perspektivansicht eine Halteeinrichtung 36 einer Vorrichtung dargestellt, mit welcher die drei Austrittsquerschnitte A, B, C ermittelt werden können. Die Halteeinrichtung 36 umfasst drei Aufnahmen 38, 40, 42, zwischen welchen die beiden Turbinenschaufeln 12, 14 positioniert werden können. Mit anderen Worten ist der Turbinenschaufel-Zwilling 10 so an der Halteeinrichtung 36 positionierbar, dass die mittlere Aufnahme 40 in den Zwischenraum zwischen den beiden Turbinenschaufeln 12, 14 hineinragt. Die hintere Aufnahme 38 kommt demzufolge mit der Konvexseite der Turbinenschaufel 12 in Anlage, während die vordere Aufnahme 42 mit der Konkavseite der Turbinenschaufel 14 in Anlage kommt. Die drei Aufnahmen 38, 40, 42 sind dabei so gegeneinander verstellbar, dass sich eine positionsgenaue Fixierung des Turbinenschaufel-Zwillings 10 an der Halteeinrichtung 36 realisieren lässt. Dabei sind die jeweils in Anlage mit den Turbinenschaufeln 12, 14 kommenden Flächen der Aufnahmen 38, 40, 42 entsprechend an deren Konkav- bzw. Konvexseiten angepasst. Dies bedeutet, dass beispielsweise die Rückseite der vorderen Aufnahme 42 in ihrer Form an die Konkavseite der Turbinenschaufel 14 angepasst ist und dass die Vorderseite der Aufnahme 38 in ihrer Form an die Konvexseite der Turbinenschaufel 12 angepasst ist. Die mittlere Aufnahme 40 ist hingegen sowohl an die Konvexseite der Turbinenschaufel 14 wie auch an die Konkavseite der Turbinenschaufel 12 angepasst.

Damit der Turbinenschaufel-Zwilling 10 insgesamt gegenüber den Aufnahmen 38, 40, 42 fixiert ist, wird dieser mittels einer Oberplatte 44 an der Halteeinrichtung 36 niedergehalten. Die Oberplatte 44 ist hierzu an einem Unterteil 46 festlegbar, welches seinerseits gemeinsam mit der Halteeinrichtung 36 auf einer Grundplatte 48 ruht. Die Oberplatte 44 stützt sich dabei gegen einen Kragen 50 der inneren Plattform 16 des Turbinenschaufel-Zwillings 10 ab.

In Fig. 4 ist in einer schematischen und perspektivischen Seitenansicht eine Messeinrichtung 52 dargestellt, welche vorliegend als mehrgelenkiger Messarm ausgebildet ist. Die Messeinrichtung 52 umfasst einen Sockelteil 54, mittels welchem diese auf der Grundplatte 48 angeordnet werden kann. Darüber hinaus umfasst die Messeinrichtung 52 einen Tastkopf 56, mittels welchem der Turbinenschaufel-Zwilling 10 bzw. insbesondere dessen Austrittsquerschnitte A, B, C auf im Weiteren noch näher beschriebene Weise vermessen werden können. Die Messeinrichtung 52 ist beispielsweise über eine Leitung 58 mit einer lediglich schematisch angedeuteten Rechnereinheit 60 verbunden, welche zur Ermittlung der einzelnen Austrittsquerschnitte A, B, C auf im Weiteren noch näher beschriebene Weise dient.

Aus Fig. 5 ist ein Kalibrierkegel 62 erkennbar, welcher auf der Grundplatte 48 festgelegt werden kann. Der Kalibrierkegel 62 umfasst dabei drei Messpunkte 64, über welche die Messeinrichtung 52 kalibriert werden kann. Eine Kalibrierung der Halteeinrichtung 36 kann hingegen dadurch vorgenommen werden, dass ein der Form des Turbinenschaufel-Zwillings 10 entsprechendes Kalibrierungsbauteil an diesem fixiert wird. Darüber hinaus sind hierdurch die Positionen insbesondere der Austrittsquerschnitte A, B, C gegenüber der Messeinrichtung 52 kalibrierbar.

Anhand der Fig. 6 und 7 soll nun das Verfahren zur Ermittlung des jeweiligen Austrittsquerschnitts A, B, C des Turbinenschaufel-Zwillings 10 erläutert werden:
Hierzu zeigen die Fig. 6 und 7 in einer schematischen und leicht perspektivischen Vorderansicht bzw. in einer leicht perspektivischen Draufsicht den an der Halteeinrichtung 36 fixierten Turbinenschaufel-Zwilling 10. Zur Ermittlung des offenen Austrittsquerschnitts A werden zunächst mittels der Messeinrichtung 52 bzw. mittels deren Tastkopfes 56 vier Messpunkte a, b, c, d im Bereich der beiden Stirnseiten 23, 25 der inneren und der äußeren Plattform 16, 18 ermittelt. Über diese vier Messpunkte a, b, c, d kann mittels der Rechnereinheit 60 eine Ebene E (Fig. 2) ermittelt werden, welche die vordere Stirnseite 20 des Turbinenschaufel-Zwillings 10 bestimmt. Mit anderen Worten wird durch die vier Messpunkte a, b, c, d das exakte flächige Ende des Turbinenschaufel-Zwillings 10 an der Stirnseite 20 bestimmt.

In einem nachfolgenden Verfahrensschritt wird mittels der Messeinrichtung 52 bzw. mittels deren Tastkopfes 56 eine offene, U-förmige Messlinie m₁ entlang der jeweiligen Begrenzungswände 65, 66, 67 des offenen Austrittsquerschnitts A abgefahren bzw. abgetastet. Hierzu wird der Tastkopf 56 von einem Anfangspunkt 68 bis zu einem Endpunkt 69 in einer geschlossenen Linie geführt. Der Tastkopf 46 wird entlang eines flächigen Anschlags 72 geführt, welcher durch die Stirnseite der vorderen Aufnahme 42 der Halteeinrichtung 36 gebildet wird. Mit anderen Worten ist die vordere Stirnseite der vorderen Aufnahme 42 so ausgebildet, dass diese senkrecht zum Austrittswinkel bzw. in der Ebene des Austrittsquerschnitts A verläuft. Demzufolge kann der Tastkopf 56 zum Abfahren der Messlinie m₁ im Eckbereich zwischen dem Anschlag 72 und den jeweiligen Begrenzungswänden 65, 66, 67 des offenen Austrittsquerschnitts A geführt werden. Der Anfangspunkt 68 und der Endpunkt 69 der offenen Messlinie m₁ befinden sich dabei an der jeweiligen Stirnseite 23, 25 der zugehörigen Plattform 16, 18.

Mittels der Rechnereinheit 60 werden beim Abfahren der Messlinie m₁ zugehörige Messwerte beispielsweise in Messintervallen aufgenommen.

Die mittels der Rechnereinheit 60 ermittelte Ebene E, welche durch die Messpunkte a, b, c, d bestimmt ist, und die Fläche des Austrittsquerschnitts A, welche durch die Messlinie m₁ bestimmt wird, schneiden sich im Bereich einer Begrenzungslinie b₁. Mit anderen Worten ergibt sich die Begrenzungslinie b₁ durch die Schnittlinie der Ebene des offenen Austrittsquerschnitts A und der Ebene E, welche durch die Messpunkte a, b, c, d bestimmt ist.
Demzufolge ist durch die Begrenzungslinie b₁ das linienförmige Ende des offenen Austrittsquerschnitts A eindeutig bestimmbar, so dass die Fläche des Austrittsquerschnitts A eindeutig bestimmt bzw. angegeben werden kann. Sowohl die Ermittlung der Ebene E wie auch des Austrittsquerschnitts A erfolgen vorliegend mittels der Recheneinheit 60.

Zur Ermittlung des mittleren geschlossenen Austrittsquerschnitts B werden mittels des Tastkopfs 56 die außenumfangseitigen Begrenzungswände 27, 28, 29, 30 entlang einer umlaufenden Messlinie m₂ abgefahren bzw. abgetastet. Diese Messlinie m₂ liegt wiederum in der Ebene des Austrittsquerschnitts B. Diese Ebene wird bestimmt durch einen Anschlag 71, welcher durch die vordere Stirnseite der mittleren Aufnahme 40 gebildet wird. Mit anderen Worten ist die vordere Stirnseite der Aufnahme 40 so ausgebildet bzw. angeordnet, dass diese genau in der Ebene des geschlossenen Austrittsquerschnitts B liegt. Die geschlossene Messlinie m₂ kann somit auf einfache Weise dadurch mittels des Tastkopfes 56 abgefahren werden, dass dieser im Eckbereich zwischen dem Anschlag 71 und den Begrenzungswänden 27, 28, 29, 30 entlang einer geschlossenen umlaufenden Linie geführt wird. Während des Abfahrens bzw. Abtastens der Messlinie m₂ werden wiederum eine Mehrzahl von Messwerten mittels der Recheneinheit 60 aufgenommen, wobei die Messintervalle gegebenenfalls einstellbar sind.

Wie sich der offene Austrittsquerschnitt C ermitteln lässt, welcher an der dem Austrittsquerschnitt A gegenüber liegenden Stirnseite 22 des Turbinenschaufel-Zwillings 10 angeordnet ist, wird aus Fig. 7 erkennbar. Dies erfolgt in identischer Weise wie beim Ermitteln bzw. Vermessen des Austrittsquerschnitts A. Demzufolge werden zunächst jeweils zwei Messpunkte a, b, c, d an den oberen bzw. unteren Enden der jeweiligen Stirnseiten 24, 26 der beiden Plattformen 16, 18 ermittelt. Hierdurch lässt sich wiederum die Ebene E bestimmen, welche vorliegend planparallel der an der anderen Stirnseite 20 angeordneten Ebene E verläuft. Nunmehr kann wiederum die U-förmige offene Messlinie m₃ entlang der jeweiligen Begrenzungswände 65, 66, 67 des Austrittsquerschnitts C abgefahren bzw. abgetastet werden, wobei der Anfangspunkt 68 wiederum im Bereich der einen und der Endpunkt 69 im Bereich der anderen Stirnseite 24, 26 gewählt wird. Zum Abfahren der Messlinie m₃ dient die Stirnseite der Aufnahme 38 als Anschlag 70, welcher in der Ebene des Austrittsquerschnitts C verläuft. Demzufolge kann wiederum der Tastkopf 56 im Eckbereich zwischen dem Anschlag 70 und den Begrenzungswänden 65, 66, 67 entlang der Messlinie m₃ bewegt werden.

Nachdem die Ebene E anhand der Messpunkte a, b, c, d ermittelt worden ist, und nachdem die Messlinie m₃ ermittelt worden ist, kann mittels der Rechnereinheit 60 wiederum eine Begrenzungslinie b₃ ermittelt werden, entlang welcher die Ebene E an der Stirnseite 22 des Turbinenschaufel-Zwillings 10 die Ebene des offenen Austrittsquerschnitts C schneidet.

Demzufolge gibt die Begrenzungslinie b₃ wiederum das linienförmige Ende der Fläche des Austrittsquerschnitts C an.

Insgesamt ist somit ersichtlich, dass durch die Bestimmung der beiden Ebenen E an den beiden Stirnseiten 20, 22 des Bauteils 10 jeweils eine genaue Begrenzungslinie b₁, b₃ bestimmt werden kann, an welcher die Fläche des jeweiligen offenen Austrittsquerschnitts A, C endet. Addiert man die beiden Flächen der Austrittsquerschnitte A, C, ergibt sich zumindest annähernd die Fläche des geschlossenen Austrittsquerschnitts B. Die Summierung der beiden offenen Austrittsquerschnitte A, C wird vorliegend mittels der Rechnereinheit 60 durchgeführt. Danach wird die Summe der beiden Austrittsquerschnitte A, C mit dem geschlossenen Austrittsquerschnitt B aufsummiert bzw. addiert. Werden mehrere bzw. alle Turbinenschaufel-Zwillinge 10 eines Turbinenschaufel-Rings gemessen, so können alle Austrittsquerschnitte summiert werden, um einen gesamten Austrittsquerschnitt bestimmen zu können.

Die Vorrichtung 52 bzw. deren Tastkopf 56 werden vorliegend per Hand entlang der Messlinien m₁, m₂, m₃ geführt. Ebenfalls per Hand werden die Messpunkte a, b, c, d der beiden Ebenen E ermittelt. Als im Rahmen der Erfindung mitumfasst ist jedoch zu betrachten, dass der Tastkopf 56 gegebenenfalls auch automatisch geführt werden könnte.

Insgesamt ist somit aus den Figuren erkennbar, dass durch die Anschläge 70, 71, 72 die zugehörigen Messlinien m₁, m₂, m₃ in relativ schneller Abfolge mittels des Tastkopfs 56 abgefahren werden können. Die jeweils vor dem Ermitteln der Messlinien m₁ und m₃ erfolgende Aufnahme der Messpunkte a, b, c, d kann ebenfalls äußerst schnell erfolgen, so dass insgesamt ein Verfahren geschaffen ist, bei welchem der Turbinenschaufel-Zwilling 10 in einem Zeitraum von kleiner 30 Sekunden vermessen bzw. die Ausschnittsquerschnitte a, b, c mittels der Rechnereinheit 60 bestimmt werden können. Die Datenausgabe kann mittels der Rechnereinheit 60 in einfacher Weise für jedes einfache Bauteil 10 oder aber für den kompletten Turbinenschaufel-Ring erfolgen.

Als im Rahmen der Erfindung mitumfasst ist es zu betrachten, dass anstelle der hier vorliegenden Turbinenschaufel-Zwillinge 10 auch Mehrlingsturbinenschaufeln mit mehr als zwei Turbinenschaufeln vermessen werden können. Hierbei ergeben sich dann gegebenenfalls mehrere geschlossene Austrittsquerschnitte zwischen den jeweils zwei benachbarten Turbinenschaufeln.

## Patentansprüche

1. Verfahren zur Ermittlung des Austrittsquerschnitts (A, B, C) eines, eine oder mehrere Turbinenschaufeln (12, 14) umfassenden Bauteils, insbesondere eines Turbinenschaufel-Zwillings (10), einer Gasturbine, bei welchem wenigstens ein geschlossener Austrittsquerschnitt (B) zwischen den jeweiligen Turbinenschaufeln (12, 14) und/oder jeweilige offene Austrittsquerschnitte (A, C) seitlich der mindestens einen Turbinenschaufel (12, 14) mittels einer Messeinrichtung (52) vermessen werden, wobei zum Ermitteln des entsprechenden Austrittsquerschnitts (A, B, C) dessen jeweilige Begrenzungswände (27, 28, 29, 30; 65, 66, 67) mittels der Messeinrichtung (52) entlang einer umlaufend geschlossenen und/oder einer offenen Messlinie (m₁, m₂, m₃) abgefahren werden, wobei mittels einer Rechnereinheit (60) beim Abfahren der Messlinie (m₁, m₂, m₃) zugehörige Messwerte aufgenommen werden und wobei das Bauteil (10) vor dem Ermitteln der Messlinie (m₁, m₂, m₃) mittels einer Halteeinrichtung (36) fixiert wird, **dadurch gekennzeichnet, dass** die Ebene des jeweiligen Austrittsquerschnitts (A, B, C) mittels eines zugeordneten Anschlags (70, 71, 72) der Halteeinrichtung (36) vorgegeben wird.

2. Verfahren nach Anspruch 1, **dadurch gekennzeichnet, dass** ein Messintervall bestimmt wird, in welchen beim Abfahren der Messlinie (m₁, m₂, m₃) zugehörige Messwerte mittels der Rechnereinheit (60) aufgenommen werden.

3. Verfahren nach Anspruch 1 oder 2, **dadurch gekennzeichnet, dass** zum Ermitteln des geschlossenen Austrittsquerschnitts (B) dessen aul;ienumfangsseitige Begrenzungswände (27, 28, 29, 30) entlang einer umlaufend geschlossenen Messlinie (m₂) abgefahren werden.

4. Verfahren nach einem der vorhergehenden Ansprüche, **dadurch gekennzeichnet, dass** zum Ermitteln der offenen Austrittsquerschnitte (A, C) deren Begrenzungswände (65, 66, 67) entlang einer offenen Messlinie (m₁, m₃) zwischen voneinander entfernten Anfangs- und Endpunkten (68, 69) der Messlinie (m₁, m₃) abgefahren werden.

5. Verfahren nach Anspruch 4, **dadurch gekennzeichnet, dass** zur Ermittlung der offenen Austrittsquerschnitte (A, C) eine jeweilige Ebene (E) an den Stirnseiten (20, 22) des Bauteils (10) mittels der Rechnereinheit (60) bestimmt wird, durch welche eine jeweilige Begrenzungslinie (b₁, b₃) des jeweils zugeordneten offenen Austrittsquerschnitts (A, C) ermittelt wird.

6. Verfahren nach Anspruch 5, **dadurch gekennzeichnet, dass** die Ebenen (E) durch eine Mehrzahl von jeweiligen mittels der Messeinrichtung (52) ermittelten Messpunkten (a, b, c, d) im Bereich der Stirnseiten (23, 24, 25, 26) einer inneren und äußeren, jeweils die Turbinenschaufel (12, 14) in Umfangsrichtung verbindenden Plattform (16, 18) des Bauteils (10) ermittelt werden.

7. Verfahren nach Anspruch 6, **dadurch gekennzeichnet, dass** die Messpunkte (a, b, c, d) im Bereich der jeweiligen Stirnseiten (23, 24, 25, 26) der inneren und äußeren Plattform (16, 18) des Bauteils (10) ermittelt werden, bevor die jeweils zugehörige offene Messlinie (m₁, m₃) des entsprechenden offenen Austrittsquerschnitts (A, C) abgefahren wird.

8. Verfahren nach Anspruch 6 oder 7, **dadurch gekennzeichnet, dass** die Messeinrichtung (52) zum Ermitteln der jeweiligen Messlinie (m₁, m₂, m₃) und/oder zum Ermitteln der Mehrzahl von Messpunkten (a, b, c, d) im Bereich der Stirnseiten (23, 24, 25, 26) der Plattformen (16, 18) per Hand entlang des Bauteils (10) bewegt wird.

9. Verfahren nach einem der vorhergehenden Ansprüche, **dadurch gekennzeichnet, dass** die beiden offenen Austrittsquerschnitte (A, C) zu einem gesamten Austrittsquerschnitt summiert werden, wonach eine Summierung mit dem wenigstens einen geschlossenen Austrittsquerschnitt (B) erfolgt.

10. Vorrichtung zur Ermittlung des Austrittsquerschnitts (A, B, C) eines, eine oder mehrere Turbinenschaufeln (12, 14) umfassenden Bauteils, insbesondere eines Turbinenschaufel-Zwillings (10), einer Gasturbine, mit einer Messeinrichtung (52), mittels welcher wenigstens ein geschlossener Austrittsquerschnitt (B) zwischen den jeweiligen Turbinenschaufeln (12, 14) und/oder jeweilige offene Austrittsquerschnitte (A, C) seitlich der mindestens einen Turbinenschaufel (12, 14) vermessbar sind, wobei Begrenzungswände (27, 28, 29, 30; 65, 66, 67) des jeweiligen Austrittsquerschnitts (A, B, C) mittels der Messeinrichtung (52) entlang einer Messlinie (m₁, m₂, m₃) abfahrbar sind, welche mittels einer Rechnereinheit (60) auswertbar ist, und wobei zur Fixierung des Bauteils (10) eine Halteeinrichtung (36) vorgesehen ist, entlang welcher eine Messeinrichtung (52) führbar ist, **dadurch gekennzeichnet, dass** die Halteeinrichtung (52) wenigstens einen Anschlag (70, 71, 72) umfasst, welcher senkrecht zu einem zugeordneten Austrittswinkel verläuft und sich in der Ebene des jeweiligen Austrittsquerschnitts (A, B, C) erstreckt.

11. Vorrichtung nach Anspruch 10, **dadurch gekennzeichnet, dass** durch die Messeinrichtung (52) eine Mehrzahl von jeweiligen Messpunkten (a, b, c, d) einer zugehörigen Ebene (E) an den Stirnseiten (23, 24, 25, 26) einer inneren und äusseren, jeweils die Turbinenschaufel (12, 14) in Umfangsrichtung verbindenden Plattform (16, 18) des Bauteils (10) ermittelbar sind, wobei mittels der Rechnereinheit (60) eine jeweilige Begrenzungslinie (b₁, b₃) des zugeordneten offenen Austrittsquerschnitts (A, C) bestimmbar ist.

12. Vorrichtung nach Anspruch 10 oder 11, **dadurch gekennzeichnet, dass** die Halteeinrichtung (36) für jeden Austrittsquerschnitt (A, B, C) des Bauteils (70, 71, 72) einen separaten Anschlag (70, 71, 72) aufweist.

13. Vorrichtung nach einem der Ansprüche 10 bis 12, **dadurch gekennzeichnet, dass** die Messeinrichtung (52) und die Halteeinrichtung (36) mittels eines Kalibrierkegels (62) bzw. eines Kalibrierungsbauteils (10) zu kalibrieren sind.

## Claims

1. A method for determining the outlet cross-section (A, B, C) of a component that comprises one or more turbine blades (12, 14), in particular a turbine-blade twin (10), of a gas turbine, in which at least one closed outlet cross-section (B) between the respective turbine blades (12, 14) and/or respective open outlet cross-sections (A, C) to the side of the at least one turbine blade (12, 14) are measured by means of a measuring device (52), wherein in order to determine the corresponding outlet cross-section (A, B, C) its respective boundary walls (27, 28, 29, 30; 65, 66, 67) are traversed by means of the measuring device (52) along a circumferentially closed and/or an open measuring line (m₁, m₂, m₃), wherein when the measuring line (m₁, m₂, m₃) is traversed associated measured values are picked up by means of a computer unit (60), and wherein the component (10) is fixed by means of a holding device (36) before the determination of the measuring line (m₁, m₂, m₃), **characterised in that** the plane of the respective outlet cross-section (A, B, C) is predetermined by means of an associated stop (70, 71, 72) of the holding device (36).

2. A method according to claim 1, **characterised in that** a measurement interval is defined in which when the measuring line (m₁, m₂, m₃) is traversed associated measured values are picked up by means of the computer unit (60).

3. A method according to claim 1 or 2, **characterised in that** in order to determine the closed outlet cross-section (B) its boundary walls (27, 28, 29, 30) on the outer-periphery side are traversed along a circumferentially closed measuring line (m₂).

4. A method according to one of the preceding claims, **characterised in that** in order to determine the open outlet cross-sections (A, C) their boundary walls (65, 66, 67) are traversed along an open measuring line (m₁, m₃) between starting and end points (68, 69) of the measuring line (m₁, m₃) that are at a distance from each other.

5. A method according to claim 4, **characterised in that** in order to determine the open outlet cross-sections (A, C) a respective plane (E) is defined at the end faces (20, 22) of the component (10) by means of the computer unit (60) by means of which a respective boundary line (b₁, b₃) of the respectively associated open outlet cross-section (A, C) is determined.

6. A method according to claim 5, **characterised in that** the planes (E) are determined by means of a plurality of respective measurement points (a, b, c, d) determined by means of the measuring device (52) in the region of the end faces (23, 24, 25, 26) of an inner and outer platform (16, 18) of the component (10) connecting the respective turbine blade (12, 14) in the peripheral direction.

7. A method according to claim 6, **characterised in that** the measurement points (a, b, c, d) are determined in the region of the respective end faces (23, 24, 25, 26) of the inner and outer platform (16, 18) of the component (10) before the respectively associated open measuring line (m₁, m₃) of the corresponding open outlet cross-section (A, C) is traversed.

8. A method according to claim 6 or 7, **characterised in that** the measuring device (52) is moved by hand along the component (10) in order to determine the respective measuring line (m₁, m₂, m₃) and/or in order to determine the plurality of measurement points (a, b, c, d) in the region of the end faces (23, 24, 25, 26) of the platforms (16, 18).

9. A method according to one of the preceding claims, **characterised in that** the two open outlet cross-sections (A, C) are summed to give a total outlet cross-section, after which a summation is effected with the at least one closed outlet cross-section (B).

10. A device for determining the outlet cross-section (A, B, C) of a component that comprises one or more turbine blades (12, 14), in particular a turbine-blade twin (10), of a gas turbine, having a measuring device (52) by means of which at least one closed outlet cross-section (B) between the respective turbine blades (12, 14) and/or respective open outlet cross-sections (A, C) to the side of the at least one turbine blade (12, 14) can be measured, wherein boundary walls (27, 28, 29, 30; 65, 66, 67) of the respective outlet cross-section (A, B, C) are traversed by means of the measuring device (52) along a measuring line (m₁, m₂, m₃) which can be evaluated by means of a computer unit (60), and wherein in order to fix the component (10) a holding device (36) is provided along which a measuring device (52) can be guided, **characterised in that** the holding device (52) comprises at least one stop (70, 71, 72) which runs perpendicularly to an associated outlet angle and extends in the plane of the respective outlet cross-section (A, B, C).

11. A device according to claim 10, **characterised in that** a plurality of respective measurement points (a, b, c, d) of an associated plane (E) can be determined by the measuring device (52) at the end faces (23, 24, 25, 26) of an inner and outer platform (16, 18) of the component (10) connecting the respective turbine blade (12, 14) in the peripheral direction, wherein a respective boundary line (b₁, b₂) of the associated open outlet cross-section (A, C) can be defined by means of the computer unit (60).

12. A device according to claim 10 or 11, **characterised in that** the holding device (36) has a separate stop (70, 71, 72) for each outlet cross-section (A, B, C) of the component (70, 71, 72).

13. A device according to one of claims 10 to 12, **characterised in that** the measuring device (52) and the holding device (36) are to be calibrated by means of a calibrating cone (62) or a calibration component (10).

## Revendications

1. Procédé destiné à déterminer la section de sortie (A, B, C) d'un composant, en particulier d'un système jumelé d'aubes de turbine (10), muni d'une ou de plusieurs aubes de turbine (12, 14), d'une turbine à gaz, dans lequel procédé au moins une section de sortie (B) fermée est mesurée entre les aubes de turbine (12, 14) respectives et/ou les sections de sortie (A, C) ouvertes respectives, latéralement de ladite au moins une aube de turbine (12, 14) au moyen d'un dispositif de mesure (52), sachant que pour déterminer la section de sortie (A, B, C) correspondante, le dispositif de mesure (52) passe sur les parois de délimitation (27, 28, 29, 30 ; 65, 66, 67) respectives de ladite section de sortie le long d'une ligne de mesure (m₁, m₂, m₃) fermée sur le pourtour et/ou d'une ligne de mesure ouverte, des valeurs de mesure correspondantes étant enregistrées au moyen d'un ordinateur (60) pendant le passage sur la ligne de mesure (m₁, m₂, m₃), et le composant (10) étant immobilisé par un dispositif de fixation (36) avant la détermination de la ligne de mesure (m₁, m₂, m₃), **caractérisé en ce que** le plan de la section de sortie (A, B, C) respective est prédéfini au moyen d'une butée (70, 71, 72) associée du dispositif de fixation (36).

2. Procédé selon la revendication 1, **caractérisé en ce qu'**un intervalle de mesure est déterminé, pendant lequel des valeurs de mesure associées sont enregistrées au moyen de l'ordinateur (60), pendant le passage sur la ligne de mesure (m₁, m₂, m₃).

3. section de sortie selon la revendication 1 ou 2, **caractérisé en ce que** pour déterminer la section de sortie (B) fermée, les parois de délimitation (27, 28, 29, 30) de celle-ci du côté du pourtour extérieur sont parcourues le long d'une ligne de mesure (m₂) au pourtour fermé.

4. Procédé selon l'une quelconque des revendications précédentes, **caractérisé en ce que** pour déterminer les sections de sortie (A, C) ouvertes, les parois de délimitation (65, 66, 67) de celles-ci sont parcourues le long d'une ligne de mesure (m₁, m₃) ouverte entre des points de départ et de fin (68, 69) de la ligne de mesure (m₁, m₃).

5. Procédé selon la revendication 4, **caractérisé en ce que** pour déterminer les sections de sortie (A, C) ouvertes, un plan (E) respectif est déterminé sur les faces frontales (20, 22) du composant (10) au moyen de l'ordinateur (60), lequel détermine une ligne de délimitation (b₁, b₃) respective de la section de sortie (A, C) ouverte respectivement associée.

6. Procédé selon la revendication 5, **caractérisé en ce que** les plans (E) sont déterminés par une pluralité de points de mesure (a, b, c, d), déterminés par le dispositif de mesure (52), dans la zone des faces frontales (23, 24, 25, 26) d'une plate-forme (16, 18) intérieure et extérieure du composant (10), reliant respectivement les aubes de turbine (12, 14) dans le sens périphérique.

7. Procédé selon la revendication 6, **caractérisé en ce que** les points de mesure (a, b, c, d) sont déterminés dans la zone des faces frontales (23, 24, 25, 26) respectives de la plate-forme (16, 18) intérieure et extérieure du composant (10) avant le passage sur la ligne de mesure (m₁, m₃) ouverte respectivement associée de la section de sortie (A, C) ouverte correspondante.

8. Procédé selon la revendication 6 ou 7, **caractérisé en ce que** le dispositif de mesure (52), destiné à mesurer la ligne de mesure (m₁, m₂, m₃) respective et/ou destiné à déterminer la pluralité de points de mesure (a, b, c, d) dans la zone des faces frontales (23, 24, 25, 26) des plates-formes (16, 18), est déplacé manuellement le long du composant (10).

9. Procédé selon l'une quelconque des revendications précédentes, **caractérisé en ce que** les deux sections de sortie (A, C) ouvertes sont additionnées pour former une section de sortie totale, à la suite de quoi est effectuée une addition avec ladite au moins une section de sortie (B) fermée.

10. Dispositif destiné à déterminer la section de sortie (A, B, C) d'un composant, en particulier d'un système jumelé d'aubes de turbine (10), muni d'une ou de plusieurs aubes de turbine (12, 14), d'une turbine à gaz, comportant un dispositif de mesure (52), qui permet de mesurer au moins une section de sortie (B) fermée entre les aubes de turbine (12, 14) respectives et/ou les sections de sortie (A, C) ouvertes respectives, latéralement de ladite au moins une aube de turbine (12, 14), le dispositif de mesure (52) pouvant passer sur les parois de délimitation (27, 28, 29, 30 ; 65, 66, 67) de la section de sortie (A, B, C) concernée le long d'une ligne de mesure (m₁, m₂, m₃), laquelle peut être analysée par un ordinateur (60), et sachant que pour l'immobilisation du composant (10), il est prévu un dispositif de fixation (36), le long duquel peut être guidé un dispositif de mesure (52), **caractérisé en ce que** le dispositif de fixation (36) comporte au moins une butée (70, 71, 72), qui est orientée perpendiculairement à un angle de sortie associé et qui s'étend dans le plan de la section de sortie (A, B, C) respective.

11. Dispositif selon la revendication 10, **caractérisé en ce que** le dispositif de mesure (52) permet de déterminer une pluralité de points de mesure (a, b, c, d) d'un plan (E) associé sur les faces frontales (23, 24, 25, 26) d'une plate-forme (16, 18) intérieure et extérieure du composant (10), reliant respectivement les aubes de turbine (12, 14) dans le sens périphérique, l'ordinateur (60) permettant de déterminer une ligne de délimitation (b₁, b₃) respective de la section de sortie (A, C) ouverte respectivement associée.

12. Dispositif selon la revendication 10 ou 11, **caractérisé en ce que** le dispositif de fixation (36) comporte pour chaque section de sortie (A, B, C) du composant (70, 71, 72) une butée (70, 71, 72) séparée.

13. Dispositif selon l'une quelconque des revendications 10 à 12, **caractérisé en ce que** le dispositif de mesure (52) et le dispositif de fixation (36) doivent être calibrés au moyen d'un cône de calibrage (62) ou d'un élément de calibrage (10).
